# EUROPEAN PATENT APPLICATION

(11) **EP 4 610 173 A1**
(43) Date of publication of application: **03.09.2025**
(21) Application number: 23882726.5
(22) Date of filing: 26.10.2023
(51) Int. Cl.: B64D 37/30, F02C 9/56, F01K 23/02, H01M 8/04, H01M 8/04858, F02C 7/36, B64U 50/12, B64U 50/19, B64U 50/32, H01M 10/48, B64D 27/10, B64D 27/24, B64D 31/06, F01D 15/10, F02C 6/12, F02C 6/18

(54) **HYBRID ROTOR DRIVE SYSTEM AND HYBRID ROTORCRAFT**

(30) Priority: 28.10.2022 JP 2022173218; 04.07.2023 JP 2023110210
(71) Applicant: KAWASAKI JUKOGYO KABUSHIKI KAISHA, Kobe-shi, Hyogo 650-8670 (JP)
(72) Inventor: KATO, Toshihiro, Kobe-shi, Hyogo 650-8670 (JP); MAEDA, Atsushi, Kobe-shi, Hyogo 650-8670 (JP); IMAI, Takuya, Kobe-shi, Hyogo 650-8670 (JP); OKUWA, Tatsuya, Kobe-shi, Hyogo 650-8670 (JP); TAKAHASHI, Masanori, Kobe-shi, Hyogo 650-8670 (JP); HASHIMOTO, Dai, Kobe-shi, Hyogo 650-8670 (JP)
(74) Representative: Dantz, Jan Henning
(86) International application number: PCT/JP2023/038723
(87) International publication number: WO 2024/090524

(57) **Abstract**

A hybrid rotor drive system includes: a gas turbine engine including a compressor, a combustor, a turbine, and a first output shaft that mechanically connects the compressor to the turbine; an electric motor including a second output shaft; and a gear box including a first input interface, a second input interface, a speed reducer that reduces speed of rotational force input from the first input interface and the second input interface, and an output interface that outputs the rotational force, which has been reduced in speed by the speed reducer, to a rotor. The first output shaft of the gas turbine engine is mechanically connected to the first input interface, and the second output shaft of the electric motor is mechanically connected to the second input interface.

## Description

### Technical Field

The present disclosure relates to a hybrid rotor drive system and a hybrid rotorcraft.

### Background Art

PTL 1 discloses a hybrid rotorcraft including a gas turbine engine and an electric motor. The gas turbine engine and the electric motor drive a main rotor through a gear box. The gas turbine engine includes: a gas generator including a compressor, a combustor, and a turbine; and a free turbine located downstream of the gas generator. The free turbine is mechanically separated from the turbine of the gas generator. The free turbine takes out, as rotational force, energy of jet flow from the turbine of the gas generator, and outputs the rotational force to the gear box.

### Citation List

### Patent Literature

PTL 1: U.S. Patent No. 9447734

### Summary of Invention

### Technical Problem

In the gas turbine engine, the free turbine separately located downstream of the turbine connected to the compressor tends to rotate at a lower speed than the turbine connected to the compressor. Therefore, the rotational force having a relatively low speed is input from the free turbine to the gear box, and an output shaft of the electric motor connected to the gear box also rotates at a relatively low speed. As a result, required output of the electric motor increases, and this increases the size and weight of the electric motor.

An object of one aspect of the present disclosure is to reduce the size and weight of an electric motor in a hybrid rotor drive system.

### Solution to Problem

A hybrid rotor drive system according to one aspect of the present disclosure includes: a gas turbine engine including a compressor, a combustor, a turbine, and a first output shaft that mechanically connects the compressor to the turbine; an electric motor including a second output shaft; and a gear box including a first input interface, a second input interface, a speed reducer that reduces speed of rotational force input from the first input interface and the second input interface, and an output interface that outputs the rotational force, which has been reduced in speed by the speed reducer, to a rotor. The first output shaft of the gas turbine engine is mechanically connected to the first input interface, and the second output shaft of the electric motor is mechanically connected to the second input interface.

A hybrid rotorcraft according to another aspect of the present disclosure includes: a main rotor; a gas turbine engine including a compressor, a combustor, a turbine, and a first output shaft that mechanically connects the compressor to the turbine; an electric motor including a second output shaft; and a gear box including a first input interface, a second input interface, a speed reducer that reduces speed of rotational force input from the first input interface and the second input interface, and an output interface that outputs the rotational force, which has been reduced in speed by the speed reducer, to the main rotor. The first output shaft of the gas turbine engine is mechanically connected to the first input interface, and the second output shaft of the electric motor is mechanically connected to the second input interface.

### Advantageous Effects of Invention

According to one aspect of the present disclosure, the size and weight of the electric motor in the hybrid rotor drive system can be reduced.

### Brief Description of Drawings

FIG. 1 is a schematic diagram of a hybrid rotorcraft according to Embodiment 1.
FIG. 2 is a block diagram of a control system of the rotorcraft of FIG. 1.
FIG. 3 is a schematic diagram of the hybrid rotorcraft according to Embodiment 2.
FIG. 4 is a schematic diagram of the hybrid rotorcraft according to Embodiment 3.
FIG. 5 is a schematic diagram of the hybrid rotorcraft according to Embodiment 4.
FIG. 6 is a schematic diagram of the hybrid rotorcraft according to Embodiment 5.

### Description of Embodiments

Hereinafter, embodiments will be described with reference to the drawings.

### Embodiment 1

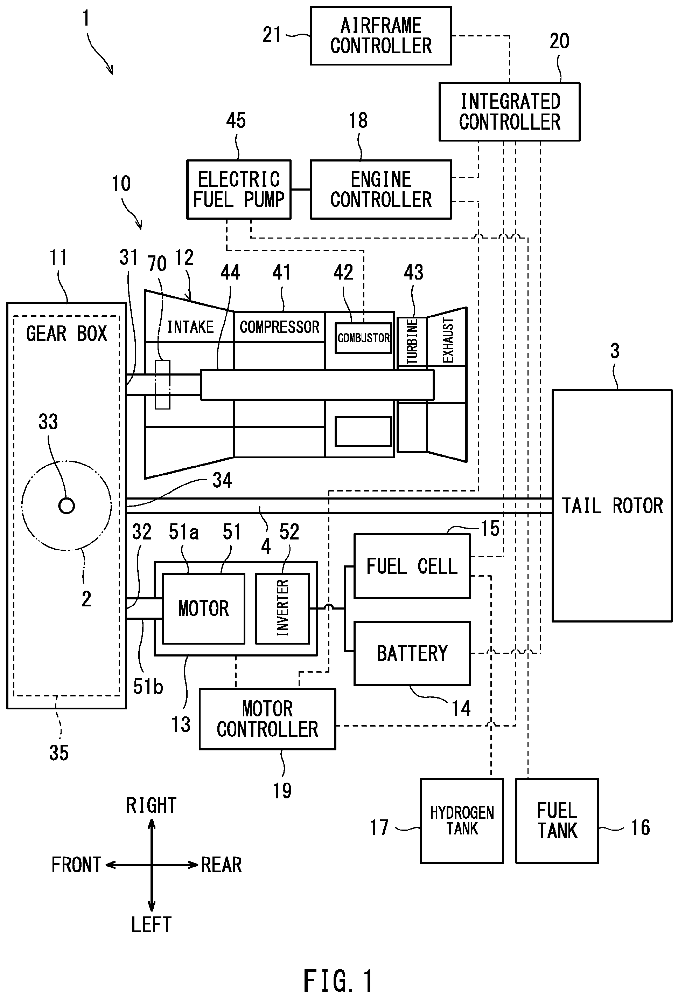

FIG. 1 is a schematic diagram of a hybrid rotorcraft 1 according to Embodiment 1. FIG. 1 shows one example of a diagram of the rotorcraft 1 when viewed from above. As shown in FIG. 1, the rotorcraft 1 includes a main rotor 2 and a tail rotor 3. The rotorcraft 1 includes a hybrid rotor drive system 10 that drives the main rotor 2 and the tail rotor 3. The rotorcraft 1 is, for example, a helicopter. The hybrid rotor drive system 10 may be applied to movable bodies, such as ships and locomotives, in addition to the rotorcrafts.

The rotor drive system 10 includes a gear box 11, a gas turbine engine 12, a motor structure 13, a battery 14, a fuel cell 15, a fuel tank 16, a hydrogen tank 17, an engine controller 18, a motor controller 19, an integrated controller 20, and an airframe controller 21.

The gear box 11 includes a first input interface 31, a second input interface 32, a first output interface 33, a second output interface 34, and a speed reducer 35. The first input interface 31 is a machine part to which an output shaft 44 of the gas turbine engine 12 is mechanically connected. The second input interface 32 is a machine part to which an output shaft 51b of an electric motor 51 is mechanically connected. The first output interface 33 is a machine part mechanically connected to the main rotor 2. The second output interface 34 is a machine part mechanically connected to a propeller shaft 4. The propeller shaft 4 extends rearward from the gear box 11 and is mechanically connected to the tail rotor 3. Each of the first input interface 31, the second input interface 32, the first output interface 33, and the second output interface 34 is, for example, a machine part, such as a shaft or a gear.

The speed reducer 35 reduces the speed of the rotational force input from the first input interface 31 and the second input interface 32. The speed reducer 35 superimposes the rotational force input from the second input interface 32 on the rotational force input from the first input interface 31. To be specific, the rotational force input from the first input interface 31 and the rotational force input from the second input interface 32 meet at the speed reducer 35.

The first input interface 31 and the second input interface 32 operate in association with each other. The first input interface 31 and the second input interface 32 are mechanically coupled to each other. The first output interface 33 outputs the rotational force, which has been reduced in speed by the speed reducer 35, to the main rotor 2. The second output interface 34 outputs the rotational force, which has been reduced in speed by the speed reducer 35, to the tail rotor 3 through the propeller shaft 4.

The gas turbine engine 12 and the motor structure 13 are located behind the gear box 11 in a front-rear direction of the rotorcraft 1. The gas turbine engine 12 is located at one side of the propeller shaft 4 in a left-right direction of the rotorcraft 1. The motor structure 13 is located at the other side of the propeller shaft 4 in the left-right direction of the rotorcraft 1.

The gas turbine engine 12 includes a compressor 41, a combustor 42, a turbine 43, the output shaft 44, and an electric fuel pump 45. The compressor 41 compresses intake air and supplies the compressed air to the combustor 42. The combustor 42 combusts fuel supplied from the electric fuel pump 45 and discharges a combustion gas. The number of gas turbine engines 12 may be one or may be two or more. The electric fuel pump 45 supplies the fuel, stored in the fuel tank 16, to the combustor 42. The fuel stored in the fuel tank 16 is, for example, hydrogen fuel or jet fuel. The turbine 43 is rotated by the combustion gas discharged from the combustor 42. Instead of the electric fuel pump 45, for example, a mechanical fuel pump driven by the gas turbine engine 12 may be used.

The output shaft 44 mechanically connects the compressor 41 to the turbine 43. To be specific, the rotational force of the turbine 43 is transmitted to the compressor 41 through the output shaft 44, and this drives the compressor 41. The compressor 41, the combustor 42, and the turbine 43 are lined up in this order from a front side to a rear side. The output shaft 44 extends in the front-rear direction of the rotorcraft 1. The output shaft 44 projects forward from the gas turbine engine 12 toward the gear box 11. The output shaft 44 is mechanically connected to the first input interface 31 of the gear box 11.

The motor structure 13 includes the electric motor 51 and an inverter 52. The electric motor 51 includes: a motor housing 51a accommodating a stator and a rotor; and the output shaft 51b connected to the rotor located in the motor housing 51a. The inverter 52 supplies electric power from the battery 14 and the fuel cell 15 to the electric motor 51. The output shaft 51b of the electric motor 51 projects forward from the motor housing 51a toward the gear box 11. The output shaft 51b is mechanically connected to the second input interface 32 of the gear box 11.

The rotational force of the output shaft 44 of the gas turbine engine 12 is input to the first input interface 31 of the gear box 11 to rotate the main rotor 2 and the tail rotor 3. Therefore, the rotational force input to the first input interface 31 of the gear box 11 is relatively higher in speed than that of a conventional configuration in which the rotational force of a free turbine is input to a gear box. As a result, the output shaft 51b of the electric motor 51 which is connected to the second input interface 32 of the gear box 11 operates in association with the output shaft 44 of the gas turbine engine 12 to rotate at high speed. When the rotational frequency of the electric motor 51 becomes high in speed, required output of the electric motor 51 lowers. Therefore, a motor that is small and light can be adopted as the electric motor 51.

A clutch 70 may be located at a power transmitting path extending from the output shaft 44 of the gas turbine engine 12 to the first input interface 31 of the gear box 11. The clutch 70 includes a clutch actuator controlled by the engine controller 18. When the engine controller 18 detects that there is an abnormality in the gas turbine engine 12, the engine controller 18 controls the clutch 70 such that the clutch 70 becomes a disengaged state. Thus, the transmission of the rotational force of the output shaft 44 of the gas turbine engine 12 to the first input interface 31 of the gear box 11 is cut off, and the main rotor 2 can be stably driven by the motor structure 13 or another gas turbine engine. The clutch 70 may not be included.

The battery 14 and the fuel cell 15 are electrically connected to the inverter 52 of the motor structure 13. For example, the battery 14 and the fuel cell 15 are located behind the motor structure 13 and at the other side of the propeller shaft 4 in the left-right direction. However, the battery 14 and the fuel cell 15 may be located at another place. The fuel cell 15 generates electric power by a chemical reaction between hydrogen and oxygen. The fuel cell 15 takes in hydrogen from the hydrogen tank 17 and takes in oxygen from air. The fuel cell may use another configuration. For example, the jet fuel of the fuel tank 16 of the rotorcraft may be reformed and supplied to the fuel cell.

The engine controller 18 controls the gas turbine engine 12. For example, the engine controller 18 controls the electric fuel pump 45 of the gas turbine engine 12. The motor controller 19 controls the motor structure 13. For example, the motor controller 19 controls the inverter 52 of the motor structure 13. The airframe controller 21 controls an airframe of the rotorcraft 1. For example, the airframe controller 21 controls an actuator that changes a pitch angle of a blade of the main rotor 2. The integrated controller 20 integratedly outputs commands to the engine controller 18, the motor controller 19, and the airframe controller 21.

Each of the controllers 18, 19, 20, and 21 includes a processor and a memory. The processor includes, for example, a CPU (central processing unit). The memory includes, for example, a system memory, a storage memory, and the like. The system memory includes, for example, a RAM. The storage memory includes, for example, a ROM. The storage memory may include a hard disk, a flash memory, or a combination thereof. The storage memory stores a program. A configuration in which the processor executes the program read by the system memory is one example of processing circuitry.

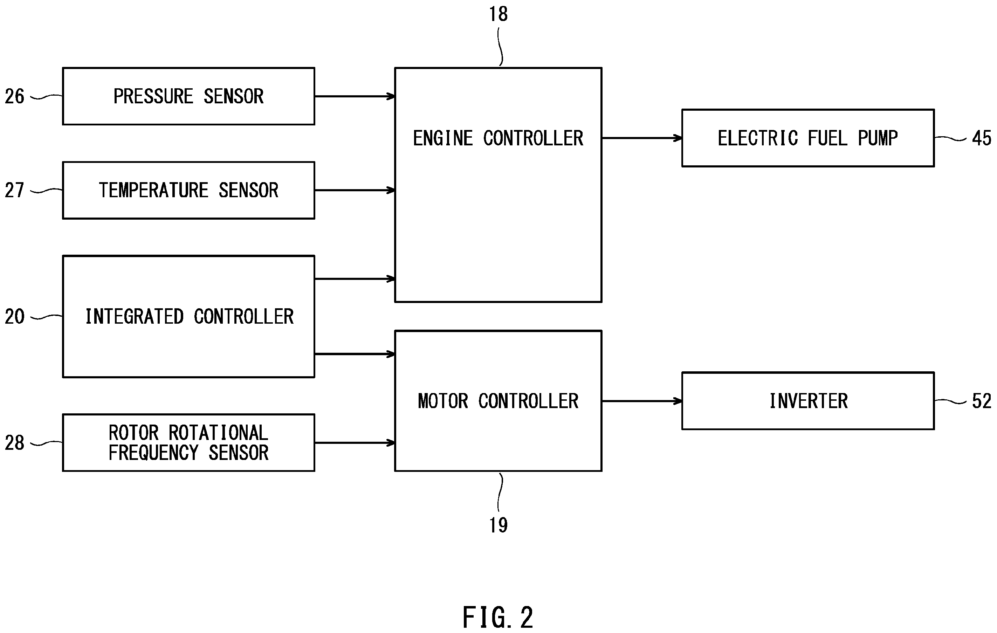

FIG. 2 is a block diagram of a control system of the rotorcraft 1 of FIG. 1. As shown in FIG. 2, the engine controller 18 is communicably connected to a pressure sensor 26, a temperature sensor 27, and the integrated controller 20. The pressure sensor 26 detects inlet air pressure of the gas turbine engine 12. The temperature sensor 27 detects an inlet air temperature of the gas turbine engine 12. The integrated controller 20 outputs a start command, a stop command, an emergency operation command, and the like to the engine controller 18. The engine controller 18 controls the electric fuel pump 45 in accordance with the command from the integrated controller 20 and signals from the pressure sensor 26 and the temperature sensor 27.

In the rotorcraft 1, the pitch angle of the blade of the main rotor 2 is changed in a state where the rotational frequency of the main rotor 2 is constant. Thus, thrust of the rotorcraft 1 is adjusted. Therefore, the rotational frequency of the rotational force transmitted from the gear box 11 to the main rotor 2 is required to be constant. On the other hand, it is preferable that the output of the gas turbine engine 12 be constant such that the gas turbine engine 12 continues to operate in an operation region where heat efficiency is high.

To set the output of the gas turbine engine 12 constant, as one example, the engine controller 18 sets the amount of fuel supplied from the electric fuel pump 45 to the combustor 42 constant. However, the output of the gas turbine engine 12 changes in accordance with the inlet air pressure and inlet air temperature of the gas turbine engine 12. Therefore, the engine controller 18 may store a map that defines a control rule of the electric fuel pump 45 which corresponds to the inlet air pressure and the inlet air temperature. The map records command values for the electric fuel pump 45 which correspond to the inlet air pressure and the inlet air temperature. Then, the engine controller 18 refers to the map, acquires the command value for the electric fuel pump 45 which corresponds to the values detected by the pressure sensor 26 and the temperature sensor 27, and performs feedforward control of the electric fuel pump 45 by the acquired command value. Thus, the gas turbine engine 12 operates while maintaining the constant output.

The motor controller 19 is communicably connected to the integrated controller 20 and a rotor rotational frequency sensor 28. The integrated controller 20 transmits the start command, the stop command, the emergency operation command, and the like to the motor controller 19. The rotor rotational frequency sensor 28 detects the rotational frequency of the main rotor 2 of the rotorcraft 1. The rotor rotational frequency sensor 28 may detect a rotational frequency (engine rotational frequency, for example) proportional to the rotational frequency of the main rotor 2 without directly detecting the rotational frequency of the main rotor 2. The motor controller 19 controls the inverter 52 of the motor structure 13 in accordance with the command from the integrated controller 20 and a signal from the rotor rotational frequency sensor 28.

During the operation of the gas turbine engine 12, the motor controller 19 performs the feedback control of the inverter 52 to adjust the output of the electric motor 51 such that the rotational frequency of the main rotor 2 which is detected by the rotor rotational frequency sensor 28 becomes constant. Therefore, when the load of the main rotor 2 changes due to, for example, a change in the flying speed of the rotorcraft 1, the output of the electric motor 51 is adjusted. Thus, even when the output of the gas turbine engine 12 remains constant, the rotational frequency of the main rotor 2 can be maintained constant. As a result, regardless of the change in the load of the main rotor 2, the gas turbine engine 12 can continue to operate in a highly efficient region, and this improves the fuel efficiency.

When the motor controller 19 receives the start command, which requests the start of the gas turbine engine 12, from the integrated controller 20 during the stop of the gas turbine engine 12, the motor controller 19 may control the inverter 52 to make the electric motor 51 drive the gas turbine engine 12. To be specific, the electric motor 51 that drives the main rotor 2 can also serve as a starter motor for the gas turbine engine 12. Thus, a dedicated starter motor can be omitted, and the rotor drive system 10 can be reduced in weight.

Normally, the motor controller 19 controls the inverter 52 such that both of the electric power of the battery 14 and the electric power of the fuel cell 15 are supplied to the electric motor 51. When the motor controller 19 receives a predetermined temporary signal from the integrated controller 20, the motor controller 19 executes motor high output control. In the motor high output control, the inverter 52 is controlled such that the output of the electric motor 51 increases, and a ratio of an electric discharge amount of the battery 14 to an electric discharge amount of the fuel cell 15 increases.

The motor controller 19 may terminate the motor high output control after a predetermined timer time has elapsed since the start of the motor high output control. Or, the motor controller 19 may terminate the motor high output control when a remaining amount of the battery 14 becomes less than a predetermined value during the execution of the motor high output control. Thus, when the motor controller 19 receives the predetermined temporary signal in the system in which both of the fuel cell 15 and the battery 14 are used, a large current is supplied from the battery 14 to the electric motor 51, and this can temporarily realize the high output of the electric motor 51.

### Embodiment 2

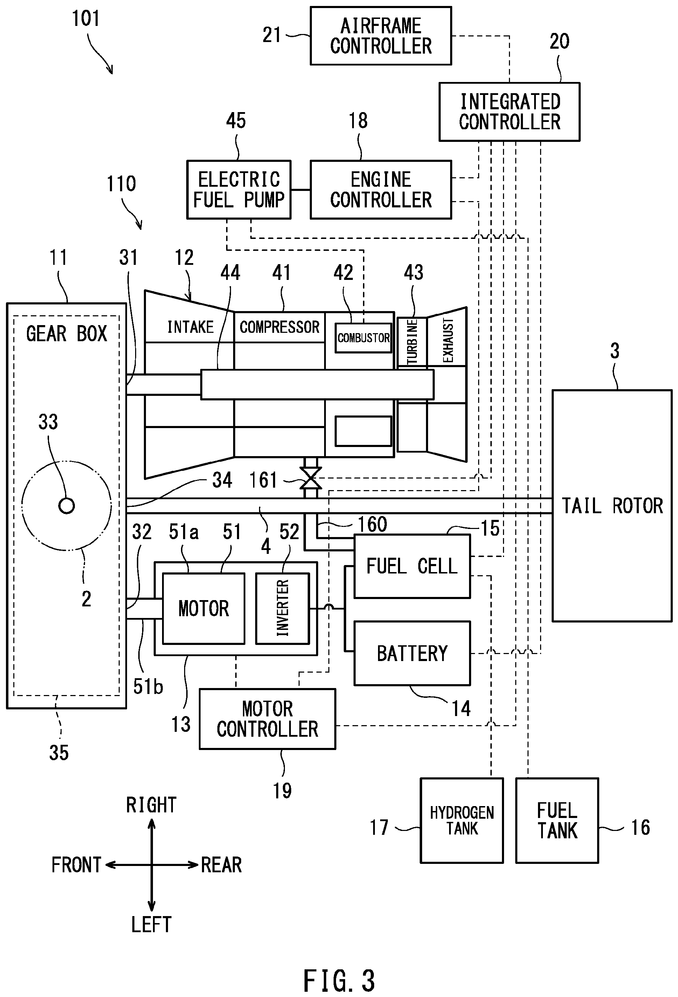

FIG. 3 is a schematic diagram of a hybrid rotorcraft 101 according to Embodiment 2. The same reference signs are used for the same components as Embodiment 1, and the repetition of the same explanation is avoided. As shown in FIG. 3, the rotorcraft 101 includes a rotor drive system 110 that drives the main rotor 2 and the tail rotor 3. The rotor drive system 110 includes a compressed air passage 160 through which the compressed air generated by the compressor 41 of the gas turbine engine 12 is guided to the fuel cell 15. A valve 161 that opens and closes the compressed air passage 160 is located at the compressed air passage 160. The valve 161 is, for example, an electromagnetic valve. The valve 161 is controlled by the integrated controller 20 so as to open and close.

When the valve 161 opens during the operation of the gas turbine engine 12, the compressed air extracted from the compressor 41 of the gas turbine engine 12 is supplied to the fuel cell 15. Thus, the amount of oxygen supplied to the fuel cell 15 increases, and this can improve the efficiency of the fuel cell 15. Since the other components are the same as those in Embodiment 1, explanations thereof are omitted.

### Embodiment 3

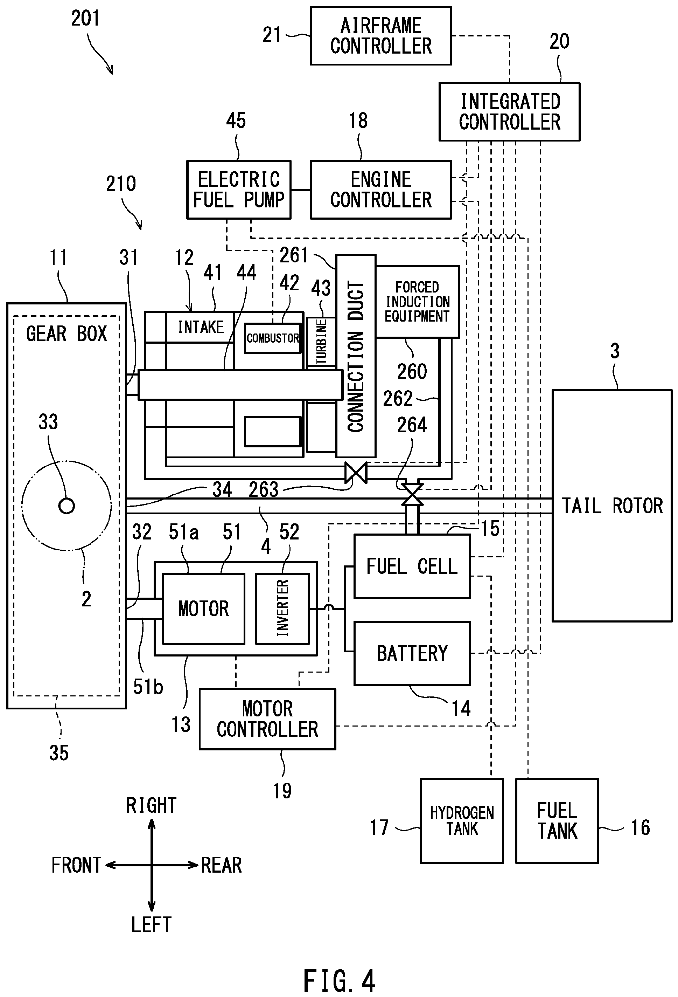

FIG. 4 is a schematic diagram of a hybrid rotorcraft 201 according to Embodiment 3. The same reference signs are used for the same components as Embodiment 1, and the repetition of the same explanation is avoided. As shown in FIG. 4, the rotorcraft 201 includes a rotor drive system 210 that drives the main rotor 2 and the tail rotor 3. The rotor drive system 210 includes forced induction equipment 260. The forced induction equipment 260 is driven by energy generated by the gas turbine engine 12. The forced induction equipment 260 is, for example, a turbocharger.

The forced induction equipment 260 communicates with the turbine 43 of the gas turbine engine 12 through a connection duct 261. The combustion gas discharged from the turbine 43 of the gas turbine engine 12 is supplied to the forced induction equipment 260 through the connection duct 261. The forced induction equipment 260 is driven by the combustion gas supplied from the turbine 43, to generate the compressed air. The forced induction equipment 260 may be a supercharger that is mechanically driven by the output shaft 44 of the gas turbine engine 12.

The forced induction equipment 260 communicates with an intake side of the compressor 41 through a compressed air passage 262. A first valve 263 is located at the compressed air passage 262. The first valve 263 opens and closes a passage extending from the forced induction equipment 260 toward the compressor 41. The first valve 263 is controlled by the integrated controller 20 so as to open and close. When the first valve 263 opens during the operation of the gas turbine engine 12, the compressed air from the forced induction equipment 260 is supplied to the compressor 41 of the gas turbine engine 12. Thus, the efficiency of the gas turbine engine 12 can be improved.

Moreover, the compressed air passage 262 makes the forced induction equipment 260 communicate with the fuel cell 15. A second valve 264 is located at the compressed air passage 262. The second valve 264 opens and closes a passage extending from the forced induction equipment 260 toward the fuel cell 15. The second valve 264 is controlled by the integrated controller 20 so as to open and close. When the second valve 264 opens during the operation of the gas turbine engine 12, the compressed air from the forced induction equipment 260 is supplied to the fuel cell 15. Thus, the amount of oxygen supplied to the fuel cell 15 increases, and this can improve the efficiency of the fuel cell 15. Both of the first valve 263 and the second valve 264 may open or may close. Since the other components are the same as those in Embodiment 1, explanations thereof are omitted.

### Embodiment 4

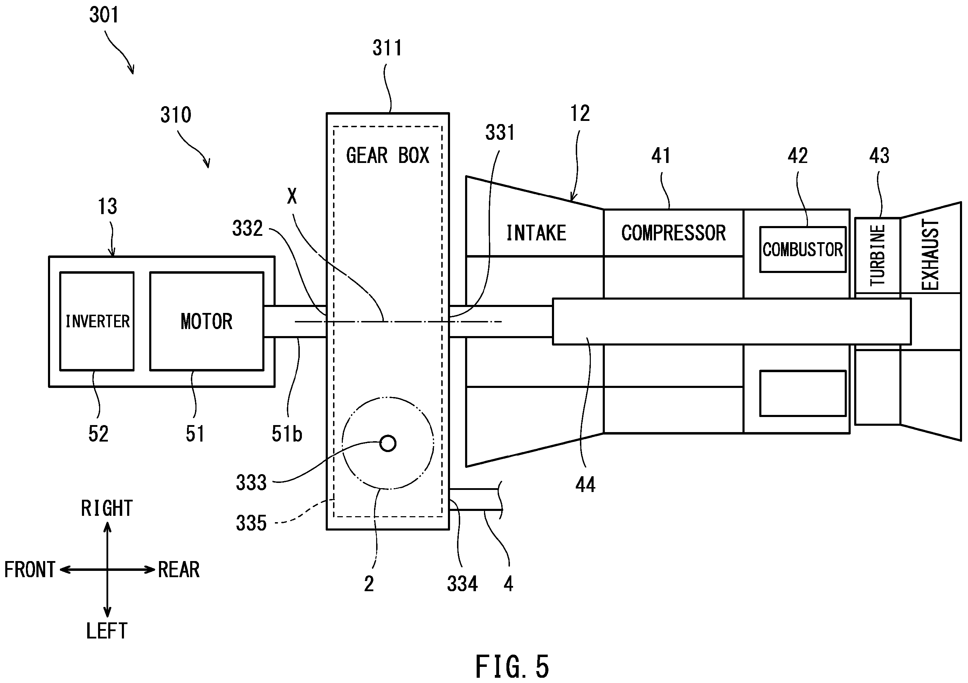

FIG. 5 is a schematic diagram of a hybrid rotorcraft 301 according to Embodiment 4. The same reference signs are used for the same components as Embodiment 1, and the repetition of the same explanation is avoided. Moreover, since the components other than the gas turbine engine 12, the motor structure 13, and a gear box 311 are the same as those of Embodiments 1 to 3, such components are not shown. As shown in FIG. 5, in a rotor drive system 310 of the rotorcraft 301, the gear box 311 is located between the gas turbine engine 12 and the motor structure 13. For example, in the front-rear direction of the rotorcraft 301, the gas turbine engine 12 is located behind the gear box 311, and the motor structure 13 is located in front of the gear box 311. The output shaft 44 of the gas turbine engine 12 and the output shaft 51b of the electric motor 51 are located on the same rotation axis X. To be specific, a first input interface 331 and a second input interface are located on the same rotation axis X. Thus, the number of parts of the gear box 311 can be reduced, and the configuration of the gear box 311 can be simplified.

The first input interface 331 of the gear box 311 is located at one side of the gear box 311, and the second input interface 332 of the gear box 311 is located at the other side of the gear box 311. For example, the first input interface 331 and the second input interface 332 are coupled to the same shaft of the speed reducer 335. A first output interface 333 of the gear box 311 is coupled to the main rotor 2. A second output interface 334 of the gear box 311 is coupled to the propeller shaft 4. Since the other components are the same as those in Embodiment 1, explanations thereof are omitted.

### Embodiment 5

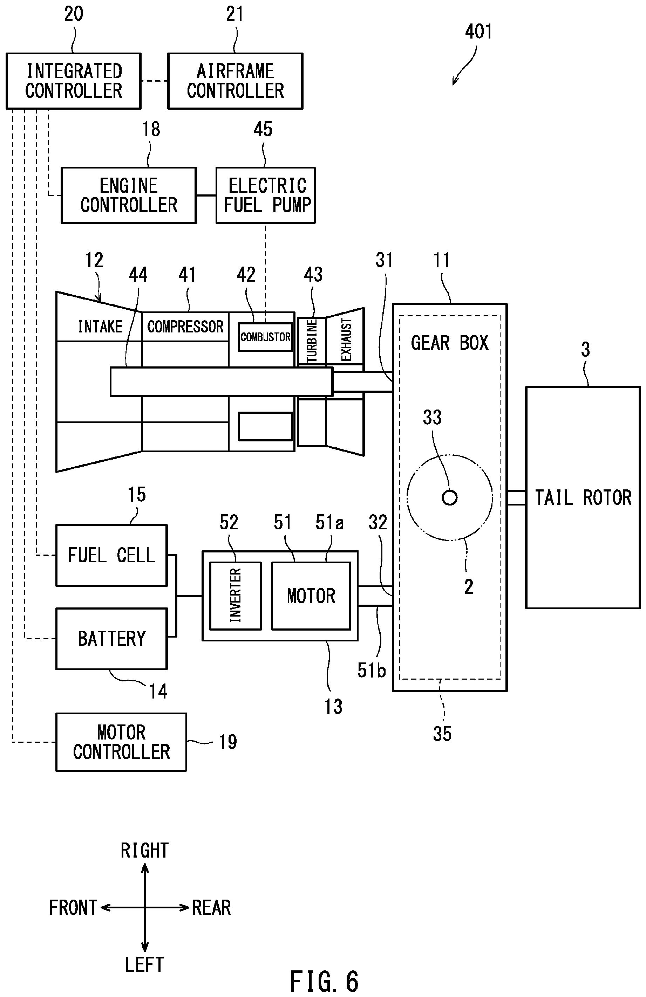

FIG. 6 is a schematic diagram of a hybrid rotorcraft 401 according to Embodiment 5. The same reference signs are used for the same components as Embodiment 1, and the repetition of the same explanation is avoided. Moreover, the fuel tank 16 and the hydrogen tank 17 are not shown in FIG. 5. As shown in FIG. 5, in the rotorcraft 401, the gear box 11 is located behind the gas turbine engine 12. The output shaft 44 of the gas turbine engine 12 projects rearward toward the gear box 11. The output shaft 44 is mechanically connected to the first input interface 31 of the gear box 11.

The motor structure 13 is located in front of the gear box 11. The motor structure 13 and the gas turbine engine 12 are lined up in the left-right direction. The output shaft 51b of the electric motor 51 projects rearward from the motor housing 51a toward the gear box 11. The output shaft 51b is mechanically connected to the second input interface 32 of the gear box 11. According to the above configuration, the degree of freedom of the layout of the rotorcraft improves. The motor structure 13 may be located behind the gear box 11, and therefore, the gear box 11 may be located between the motor structure 13 and the gas turbine engine 12 located in front of the gear box 11. The output shaft 51b of the motor structure 13 may be located in parallel with a rotating shaft of the main rotor 2.

The foregoing has described the embodiments as examples of the technology disclosed in the present application. However, the technology in the present disclosure is not limited to this and is applicable to embodiments in which modifications, replacements, additions, omissions, and the like have been suitably made. Moreover, a new embodiment may be prepared by combining the components described in the above embodiments. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

A hybrid rotor drive system including:
a gas turbine engine including a compressor, a combustor, a turbine, and a first output shaft that mechanically connects the compressor to the turbine;
an electric motor including a second output shaft; and
a gear box including
   a first input interface,
   a second input interface,
   a speed reducer that reduces speed of rotational force input from the first input interface and the second input interface, and
   an output interface that outputs the rotational force, which has been reduced in speed by the speed reducer, to a rotor, wherein:
the first output shaft of the gas turbine engine is mechanically connected to the first input interface; and
the second output shaft of the electric motor is mechanically connected to the second input interface.

According to this configuration, the rotational force of the output shaft that connects the turbine to the compressor is input to the first input interface of the gear box to rotate the rotor. Therefore, the rotational force input to the first input interface of the gear box is higher in speed than that of the conventional configuration in which the rotational force of the free turbine is input to the gear box. As a result, the output shaft of the electric motor which is connected to the second input interface of the gear box also rotates at high speed. When the rotational frequency of the electric motor becomes high in speed, the required output of the electric motor can be lowered. Therefore, the size and weight of the electric motor in the hybrid rotor drive system can be reduced.

### Second Aspect

The hybrid rotor drive system according to the first aspect, further including:
an inverter that supplies electric power to the electric motor; and
processing circuitry configured to control the gas turbine engine and the inverter, wherein:
   the processing circuitry sets an amount of fuel supplied to the gas turbine engine such that output of the gas turbine engine becomes constant; and
   the processing circuitry controls the inverter such that a rotational frequency of the rotor becomes constant.

According to this configuration, when the load of the rotor changes, the output of the electric motor is adjusted. Thus, even when the output of the gas turbine engine remains constant, the rotational frequency of the rotor can be maintained constant. Therefore, regardless of the change in the load of the rotor, the gas turbine engine can continue to operate in a highly efficient output region, and this can improve the fuel efficiency.

### Third Aspect

The hybrid rotor drive system according to the first or second aspect, further including:
an inverter that supplies electric power to the electric motor; and
processing circuitry configured to control the inverter, wherein
when the processing circuitry receives a start command, which requests start of the gas turbine engine, during stop of the gas turbine engine, the processing circuitry controls the inverter to make the electric motor drive the gas turbine engine.

According to this configuration, the electric motor that drives the rotor also serves as a starter motor for the gas turbine engine. Therefore, the rotor drive system can be reduced in weight by eliminating the starter motor.

### Fourth Aspect

The hybrid rotor drive system according to any one of the first to third aspects, further including:
a battery;
a fuel cell;
an inverter that supplies electric power from the battery and the fuel cell to the electric motor; and
processing circuitry configured to control the inverter, wherein
when the processing circuitry receives a predetermined signal, the processing circuitry controls the inverter to increase output of the electric motor and increase a ratio of an electric discharge amount of the battery to an electric discharge amount of the fuel cell.

According to this configuration, even in the system in which both of the fuel cell and the battery are used, a large current can be supplied from the battery to the electric motor upon reception of the predetermined signal. This can temporarily realize the high output of the electric motor.

### Fifth Aspect

The hybrid rotor drive system according to any one of the first to fourth aspects, further including:
forced induction equipment driven by energy generated by the gas turbine engine; and
a compressed air passage through which compressed air generated by the forced induction equipment is guided to the compressor of the gas turbine engine.

According to this configuration, the efficiency of the gas turbine engine can be improved.

### Sixth Aspect

The hybrid rotor drive system according to any one of the first to fifth aspects, further including:
a fuel cell;
forced induction equipment driven by energy generated by the gas turbine engine; and
a compressed air passage through which compressed air generated by the forced induction equipment is guided to the fuel cell.

According to this configuration, the efficiency of the fuel cell can be improved.

### Seventh Aspect

The hybrid rotor drive system according to any one of the first to sixth aspects, further including:
a fuel cell; and
a compressed air passage through which compressed air generated by the compressor of the gas turbine engine is guided to the fuel cell.

According to this configuration, the efficiency of the fuel cell can be improved.

### Eighth Aspect

The hybrid rotor drive system according to any one of the first to seventh aspects, wherein the first output shaft of the gas turbine engine and the second output shaft of the electric motor are located on a same rotation axis.

According to this configuration, the configuration of the gear box can be simplified.

### Ninth Aspect

The hybrid rotor drive system according to any one of the first to eighth aspects, further including a clutch that cuts off rotational force of the first output shaft of the gas turbine engine which is input to the first input interface of the gear box.

According to this configuration, when there is an abnormality in the gas turbine engine, the rotational force of the output shaft of the gas turbine engine which is input to the first input interface of the gear box can be cut off. Therefore, the rotor drive system can be stably driven.

### Tenth Aspect

A hybrid rotorcraft including:
a main rotor;
a gas turbine engine including a compressor, a combustor, a turbine, and a first output shaft that mechanically connects the compressor to the turbine;
an electric motor including a second output shaft; and
a gear box including
   a first input interface,
   a second input interface,
   a speed reducer that reduces speed of rotational force input from the first input interface and the second input interface, and
   an output interface that outputs the rotational force, which has been reduced in speed by the speed reducer, to the main rotor, wherein:
the first output shaft of the gas turbine engine is mechanically connected to the first input interface; and
the second output shaft of the electric motor is mechanically connected to the second input interface.

According to this configuration, the size and weight of the electric motor in the hybrid rotorcraft can be reduced.

### Reference Signs List

1, 101, 201, 301 rotorcraft
2 main rotor
10, 110, 210, 310 rotor drive system
11, 311 gear box
12 gas turbine engine
13 motor structure
14 battery
15 fuel cell
18 engine controller
19 motor controller
20 integrated controller
21 airframe controller
28 rotor rotational frequency sensor
31, 331 first input interface
32, 332 second input interface
33, 333 first output interface
34, 334 second output interface
35, 335 speed reducer
41 compressor
42 combustor
43 turbine
44 output shaft
45 electric fuel pump
51 electric motor
51b output shaft
52 inverter
70 clutch
160 compressed air passage
161 valve
260 forced induction equipment
261 connection duct
262 compressed air passage
263 first valve
264 second valve
X rotation axis

## Claims

1. A hybrid rotor drive system comprising:
a gas turbine engine including a compressor, a combustor, a turbine, and a first output shaft that mechanically connects the compressor to the turbine;
an electric motor including a second output shaft; and
a gear box including
a first input interface,
a second input interface,
a speed reducer that reduces speed of rotational force input from the first input interface and the second input interface, and
an output interface that outputs the rotational force, which has been reduced in speed by the speed reducer, to a rotor, wherein:
the first output shaft of the gas turbine engine is mechanically connected to the first input interface; and
the second output shaft of the electric motor is mechanically connected to the second input interface.

2. The hybrid rotor drive system according to claim 1, further comprising:
an inverter that supplies electric power to the electric motor; and
processing circuitry configured to control the gas turbine engine and the inverter, wherein:
the processing circuitry sets an amount of fuel supplied to the gas turbine engine such that output of the gas turbine engine becomes constant; and
the processing circuitry controls the inverter such that a rotational frequency of the rotor becomes constant.

3. The hybrid rotor drive system according to claim 1 or 2, further comprising:
an inverter that supplies electric power to the electric motor; and
processing circuitry configured to control the inverter, wherein
when the processing circuitry receives a start command, which requests start of the gas turbine engine, during stop of the gas turbine engine, the processing circuitry controls the inverter to make the electric motor drive the gas turbine engine.

4. The hybrid rotor drive system according to any one of claims 1 to 3, further comprising:
a battery;
a fuel cell;
an inverter that supplies electric power from the battery and the fuel cell to the electric motor; and
processing circuitry configured to control the inverter, wherein
when the processing circuitry receives a predetermined signal, the processing circuitry controls the inverter to increase output of the electric motor and increase a ratio of an electric discharge amount of the battery to an electric discharge amount of the fuel cell.

5. The hybrid rotor drive system according to any one of claims 1 to 4, further comprising:
forced induction equipment driven by energy generated by the gas turbine engine; and
a compressed air passage through which compressed air generated by the forced induction equipment is guided to the compressor of the gas turbine engine.

6. The hybrid rotor drive system according to any one of claims 1 to 5, further comprising:
a fuel cell;
forced induction equipment driven by energy generated by the gas turbine engine; and
a compressed air passage through which compressed air generated by the forced induction equipment is guided to the fuel cell.

7. The hybrid rotor drive system according to any one of claims 1 to 6, further comprising:
a fuel cell; and
a compressed air passage through which compressed air generated by the compressor of the gas turbine engine is guided to the fuel cell.

8. The hybrid rotor drive system according to any one of claims 1 to 7, wherein the first output shaft of the gas turbine engine and the second output shaft of the electric motor are located on a same rotation axis.

9. The hybrid rotor drive system according to any one of claims 1 to 8, further comprising a clutch that cuts off rotational force of the first output shaft of the gas turbine engine which is input to the first input interface of the gear box.

10. A hybrid rotorcraft comprising:
a main rotor;
a gas turbine engine including a compressor, a combustor, a turbine, and a first output shaft that mechanically connects the compressor to the turbine;
an electric motor including a second output shaft; and
a gear box including
a first input interface,
a second input interface,
a speed reducer that reduces speed of rotational force input from the first input interface and the second input interface, and
an output interface that outputs the rotational force, which has been reduced in speed by the speed reducer, to the main rotor, wherein:
the first output shaft of the gas turbine engine is mechanically connected to the first input interface; and
the second output shaft of the electric motor is mechanically connected to the second input interface.
